# EUROPÄISCHE PATENTANMELDUNG

(11) **EP 2 314 950 A2**
(43) Veröffentlichungstag der Anmeldung: **27.04.2011**
(21) Anmeldenummer: 10180545.5
(22) Anmeldetag: 28.09.2010
(51) Int. Cl.: F24J 2/06

(54) **Solaranlage mit einer Vorrichtung zur Wassererwärmung und Verfahren hierzu**

(30) Priorität: 15.10.2009 DE 102009049480
(71) Anmelder: Robert Bosch GmbH, 70442 Stuttgart (DE)
(72) Erfinder: Kron, Gregor, 70569 Stuttgart (DE)

(57) **Zusammenfassung**

Die Erfindung betrifft ein Verfahren zur Wassererwärmung mit Solarenergie. Weiter betrifft die Erfindung eine Vorrichtung zur Wassererwärmung mit Solarenergie. Zudem betrifft die Erfindung eine Solaranlage zur Wärmegewinnung aus Solarenergie.

Es ist eine Aufgabe der Erfindung, ein Verfahren und eine Vorrichtung zur Wassererwärmung mit Solarenergie sowie eine Solaranlage zur Wärmeenergiegewinnung mit Solarenergie zu schaffen, bei denen eine Effizienzsteigerung auf einfache Weise realisiert ist. Insbesondere ist eine Aufgabe der vorliegenden Erfindung, Verluste durch lange Fluidübertragungswege zu minimieren und einen Energieertrag zu maximieren.

Gekennzeichnet ist das Verfahren dadurch, dass die Solarenergie in Form von Lichtwellen von der Aufnahmestelle zu der Übertragungsstelle transportiert wird. Gekennzeichnet sind die Vorrichtung und die Solaranlage dadurch, dass eine Lichttransporteinheit vorgesehen ist, um die Solarenergie in Form von Lichtwellen von der Aufnahmestelle zu der Übertragungsstelle zu transportieren.

## Beschreibung

Die Erfindung betrifft ein Verfahren zur Wassererwärmung mit Solarenergie nach dem Oberbegriff des Patentanspruches 1.

Weiter betrifft die Erfindung eine Vorrichtung zur Wassererwärmung mit Solarenergie nach dem Oberbegriff des Anspruchs 6.

Zudem betrifft die Erfindung eine Solaranlage zur Wärmegewinnung aus Solarenergie nach dem Oberbegriff des Anspruchs 15.

Aus dem allgemeinen Stand der Technik sind solarthermische Anlagen bekannt. Diese arbeiten grundsätzlich gemäß zweier Prinzipien. Bei einem ersten Prinzip wird ein Solarfluid wie beispielweise ein Wasser-Glycol-Gemisch durch einen solarthermischen Kollektor gepumpt, dort erhitzt und anschließend über Rohrleitungen in einen Wärmetauscher gepumpt. Dort wird die durch das Erhitzen auf das Fluid übertragene Wärme an das Warmwasser des Wärmespeichers übertragen. Bei einem zweiten Prinzip wird in solarthermischen Kraftwerken das Sonnenlicht fokussiert und dieses erwärmt ein im Fokus befindliches Solarfluid. Es können bei beiden Prinzipien konzentrierende Photovoltaik-Systeme zur Anwendung kommen, die mittels einer nachgeführten Optik das Sonnenlicht auf kleine, hocheffiziente Solarzellen fokussieren. Hierdurch lassen sich günstigere Photovoltaikzellen aufgrund der Optik einsetzen, sodass ein höherer Wirkungsgrad erzielbar ist. Eigentlich sind die hier eingesetzten Zellen hocheffizient und damit teuer, aufgrund der kleineren Fläche aber insgesamt günstiger. In beiden Prinzipien wird jedoch stets das erwärmte Solarfluid von dem Ort der Erwärmung zu einem Ort der Übertragung mittels Fördermitteln transportiert.

Der Erfindung liegt die Aufgabe zugrunde, ein Verfahren und eine Vorrichtung zur Wassererwärmung mit Solarenergie sowie eine Solaranlage zur Wärmeenergiegewinnung mit Solarenergie zu schaffen, bei denen eine Effizienzsteigerung auf einfache Weise realisiert ist. Insbesondere ist eine Aufgabe der vorliegenden Erfindung, Verluste durch lange Fluidübertragungswege zu minimieren und einen Energieertrag zu maximieren.

Erfindungsgemäß wird dies durch die Gegenstände mit den Merkmalen des Patentanspruches 1, des Patentanspruchs 6 und des Patentanspruchs 15 gelöst. Vorteilhafte Weiterbildungen sind den Unteransprüchen zu entnehmen.

Das erfindungsgemäße Verfahren zur Wassererwärmung mit Solarenergie, umfassend ein Aufnehmen von Solarenergie an einer Aufnahmestelle und ein Übertragen zumindest eines Teils der aufgenommenen Solarenergie auf ein Wasser durch Erwärmen des Wassers an einer von der Aufnahmestelle entfernt angeordneten Übertragungsstelle, ist **dadurch gekennzeichnet, dass** die Solarenergie in Form von Lichtwellen von der Aufnahmestelle zu der Übertragungsstelle transportiert wird. Die Aufnahmestelle umfasst beispielsweise einen Solarkollektor, ein konzentrierendes Photovoltaik-System oder dergleichen. Diese sind beispielsweise an einem Mast, einem Hausdach oder dergleichen angeordnet. Die an der Aufnahmestelle eingefangene Solarenergie wird anstelle des zu erwärmenden Fluids oder Mediums, wie beispielsweise Wasser, transportiert. Ein Einkoppeln der Solarenergie in das Fluid erfolgt an einer Übertragungsstelle, die entfernt von der Aufnahmestelle angeordnet ist, beispielsweise in einem Hauskeller. Dort befindet sich vorzugsweise ein Fluidspeicher, beispielsweise ein Warmwassertank. Das durch die Solarenergie erwärmte Fluid ist somit in vorteilhaften Ausgestaltungen ein Brauchwasser, sodass eine Wärmeübertragung von einem Solarfluid auf das Brauch- oder Warmwasser entfallen kann. Der Transport der Solarenergie erfolgt bevorzugt über Lichtwellenleiter, die das eingefangene Licht in Form von Lichtwellen zu der Übertragungsstelle transportieren.

In einer Ausführungsform des erfindungsgemäßen Verfahrens ist vorgesehen, dass die Solarenergie vor dem Transport zu dem Wasser fokussiert und/oder gebündelt wird. Durch den Einsatz von hochkonzentrierenden Photovoltaik-Systemen wird das eingefangene Solarlicht gebündelt. Hierzu ist weniger Platz für einen entsprechenden Kollektor erforderlich. Das Fokussieren erfolgt bevorzugt mittels geeigneter Nachführsysteme, welche stets eine optimale Ausrichtung zum Sonnenstand gewährleisten und damit eine Effizienzsteigerung bewirken.

Bei einer weiteren Ausführungsform ist vorgesehen, dass die gebündelte Solarenergie für die Übertragung auf das zu erwärmende Medium, also beispielsweise das Wasser, zerstreut wird. Um einen möglichst weiten Bereich des Mediums zu erwärmen, wird das zuvor gebündelte und gebündelt übertragene Licht zerstreut, beispielsweise über Zerstreuungslinse.

Noch eine weitere Ausführungsform der vorliegenden Erfindung sieht vor, dass die Solarenergie eine von dem zu erwärmenden Wasser berührte Energiewandlereinheit erwärmt. Die Energiewandlereinheit kontaktiert das Wasser für eine kontaktierende Wärmeübertragung. Dabei wandelt die Energiewandlereinheit die Lichtwellen in eine andere Energieform, beispielsweise in Wärme.

Zudem ist in einer weiteren Ausführungsform der vorliegenden Erfindung vorgesehen, dass zumindest ein Teil der nicht für das Erwärmen erforderlichen, gebündelten Solarenergie in elektrischen Strom umgewandelt wird. Dies kann beispielsweise in der Energiewandlereinheit realisiert werden, indem zusätzliche Energiewandler vorgesehen sind. Beispielsweise sind Photovoltaikzellen vorgesehen, die das gebündelte Licht direkt in Strom umwandeln, falls die Lichtwellen nicht vollständig zur Wassererwärmung benötigt werden. Der Strom ist anderweitig nutzbar. Hierdurch sind keine Abschalteinrichtungen oder andere aufwendige Steuereinrichtungen erforderlich, die eine Wassererwärmung zum Schutz der Anlage stoppen.

Die erfindungsgemäße Vorrichtung zur Wassererwärmung mit Solarenergie, umfassend eine Aufnahmeeinheit zum Aufnehmen von Solarenergie an einer Aufnahmestelle und eine Übertragungseinheit zum Übertragen zumindest eines Teils der aufgenommenen Solarenergie auf ein Wasser durch Erwärmen des Wassers an einer von der Aufnahmestelle entfernt angeordneten Übertragungsstelle, ist **dadurch gekennzeichnet, dass** eine Lichttransporteinheit vorgesehen ist, um die Solarenergie in Form von Lichtwellen von der Aufnahmestelle zu der Übertragungsstelle zu transportieren. Das Sonnenlicht wird an einer Aufnahmestelle eingefangen, beispielsweise über Kollektoren, nachgeführte Kollektoren oder System mit konzentrierender Optik. Bevorzugt werden die Sonnenlichtwellen gebündelt eingefangen und in eine Lichttransporteinheit eingespeist, beispielweise einen Lichtwellenleiter. Die Lichttransporteinheit weist in einigen Ausführungsbeispielen Verstärker, Verzweigungen und dergleichen auf, um das Licht möglichst effektiv zu der Übertragungseinheit zu leiten. Die Übertragungseinheit befindet sich an einer Übertragungsstelle entfernt von der Aufnahmestelle. Beispielsweise ist die Übertragungseinheit in einem Gebäudekeller angeordnet. Durch die Übertragung mittels Lichtwellen ist ein schneller Transport von Energie, quasi mit Lichtgeschwindigkeit, möglich.

In einer Ausführungsform der vorliegenden Erfindung ist vorgesehen, dass die Lichttransporteinheit einen Lichtwellenleiter umfasst. Um die Lichtwellen in Lichtwellenform zu übertragen, ist ein Lichtwellenleiter vorgesehen. Mit diesem lassen sich entsprechende Strecken von der Aufnahmestelle zu der Übertragungsstelle einfach überbrücken. Es sind in anderen Ausführungsbeispielen mehrere Lichtwellenleiter vorgesehen, die beispielsweise gekoppelt sein können.

In noch einer weiteren Ausführungsform der vorliegenden Erfindung ist eine Lichtfokussiereinheit vorgesehen ist, um die Solarenergie vor dem Transport zu dem Wasser zu fokussieren und/oder zu bündeln. Durch Fokussieren liegen die Lichtstrahlen gebündelt vor, wodurch diese sich durch einen kleineren Lichtwellenleiter, das heißt mit erhöhter Energiedichte, transportieren lassen. Somit ist eine kleinbauende Vorrichtung realisierbar.

Ein weiteres Ausführungsbeispiel der vorliegenden Erfindung sieht vor, dass eine Streuungseinheit vorgesehen ist, welche die gebündelte Solarenergie für die Übertragung auf das Wasser zerstreut. Über die Streuungseinheit werden die zuvor gebündelten Lichtstrahlen zerstreut. Hierdurch treffen die Lichtstrahlen auf einen größeren Bereich des zu erwärmenden Wassers, wodurch eine schnellere Wärmeübertragung realisierbar ist.

Eine weitere vorteilhafte Ausführungsform der vorliegenden Erfindung sieht vor, dass die Übertragungseinheit eine Energiewandlereinheit umfasst, die sich unter Einwirkung der Solarenergie erwärmt, und die wärmeleitend mit dem zu erwärmenden Wasser in Verbindung steht. Da das Wasser, beispielsweise ein Warm- oder Brauchwasser, für eine Nutzung erwärmt wird, ist das Licht in Wärmeenergie zu transformieren. Hierzu ist eine Energiewandlereinheit vorgesehen. Die in der Energiewandlereinheit generierte Wärme ist bevorzugt mittels direkten Kontakts an das Medium übertragbar, da hier die effizienteste Wärmeübertragung realisiert ist.

Zudem sieht eine weitere Ausführungsform der vorliegenden Erfindung vor, dass eine wasserberührte Oberfläche der Energiewandlereinheit mit oberflächenvergrößernden Elementen, umfassend Rippen und Nägel, versehen ist. Die Energiewandlereinheit kontaktiert bevorzugt das zu erwärmende Wasser mit einer möglichst großen Oberfläche, um so möglichst schnell viel Wärme an das Wasser zu übertragen. Um eine große Oberfläche zu realisieren, sind entsprechende Vorsprünge und Ausnehmungen, wie Rippen, Nägel und dergleichen vorgesehen, die entsprechend von dem Wasser kontaktiert werden.

Darüber hinaus sieht eine andere vorteilhafte Ausführungsform der vorliegenden Erfindung vor, dass das zu erwärmende Wasser in einem Speicherbehälter vorliegt und die Energiewandlereinheit flächig an der Behälterinnenwand angeordnet ist. Die gängigen Warmwasseranlagen sind für Speicherbehälter ausgelegt. Dadurch, dass das zu erwärmende Wasser in einem Speicherbehälter vorliegt, ist die Erfindung auch für bestehende Systeme einsetzbar, zum Beispiel durch Nachrüsten. Um möglichst schnell viel Wärme auf das Wasser in dem Speicherbehälter zu übertragen, und möglichst wenig Volumen des Speicherbehälters einzunehmen, ist die Energiewandlereinheit bevorzugt flächig an der Behälterinnenwand angeordnet.

Wiederum eine andere vorteilhafte Ausführungsform der vorliegenden Erfindung sieht vor, dass mindestens eine Photovoltaikeinheit vorgesehen ist, um zumindest einen Teil der nicht für das Erwärmen erforderlichen, gebündelten Solarenergie in elektrischen Strom umzuwandeln. Ist das zu erwärmende Wasser auf eine maximal erforderliche Temperatur erwärmt, muss die Vorrichtung nicht abgeschaltet werden, da die Energie anderweitig nutzbar ist. So wird statt der Wassererwärmung eine Stromerzeugung, beispielsweise mittels Photovoltaikzellen bewirkt.

In einer anderen Ausführungsform der vorliegenden Erfindung ist vorgesehen, dass eine Schalteinheit für ein Umschalten zwischen Wasser erwärmender Nutzung und Strom erzeugender Nutzung der Solarenergie vorgesehen ist. Durch Betätigen eines Schalters ist somit eine permanente Nutzung gewonnener Solarenergie realisiert. Damit ist kein Anfahren und Herunterfahren der Vorrichtung erforderlich. Die Schalteinheit ist manuell, teilautomatisch oder automatisch ausführbar.

Die erfindungsgemäße Solaranlage zur Wärmegewinnung aus Solarenergie ist **dadurch gekennzeichnet, dass** mindestens eine erfindungsgemäße Vorrichtung vorgesehen ist. Für die Solaranlage sind auch mehrere Vorrichtungen vorsehbar. Je nach Größe der Solaranlage und dem Verwendungszweck sind mehrere Vorrichtungen koppelbar und entsprechend verschaltet.

Mit dem erfindungsgemäßen Verfahren, der erfindungsgemäßen Vorrichtung und der erfindungsgemäßen Solaranlage werden insbesondere die folgenden Vorteile realisiert:

Mit der vorliegenden Erfindung wird das gängige System zur solarthermischen Energiegewinnung umgekehrt.

Das zu erwärmende Medium wird nicht zum warmen Modul gepumpt, sondern die Wärmeenergie wird in Form von Licht zu einem zu erwärmenden Medium geführt. Beispielsweise befindet sich auf einem Hausdach eine sonnenlichtfokussierende Anlage, die vorzugsweise günstige Optiken benutzt, wie Fresnel-Linsen oder einfache Parabolspiegel. Diese Anlage wird in vorteilhaften Ausgestaltungen entsprechend des Sonnenstandes nachgeführt. Im Fokus des konzentrierenden Systems steht die Einkopplung der Einstrahlung in einen Lichtwellenleiter, welcher das gesamte fokussierte Licht und damit dessen Energie zu einem Wärmespeicher überträgt. Der Lichtwellenleiter ist kostengünstig ausgebildet, z. B. mit Kunststofffasern, und weist im optischen Bereich eine möglichst hohe Transparenz auf. Der Speicher ist vorzugsweise in der Nähe des Kollektors angeordnet. Aufgrund einer geringen Entfernung vom Kollektor zum Speicher sind keine zusätzlichen Dämpfungen erforderlich. Im Wärmespeicher wird das Sonnenlicht direkt eingestrahlt oder über beispielsweise eine Zerstreuungslinse einkoppelt. Die Vorteile im Einzelnen sind die Folgenden. Da die Wärmeenergie zu dem Wärmemedium (Wasser) transportiert wird und nicht umgekehrt, werden keine Fördermittel für das Wärmemedium benötigt. Entsprechend sind auch keine Energieversorger zum Fördern des Wärmemediums erforderlich. Zudem treten keine Wärmeverluste in den Rohren und Förderleitungen des Wärmemediums auf. Vorzugsweise wird die Wärmeenergie direkt in das als Wärmemedium genutzte Fluid eingekoppelt. Da die Wärmeenergie direkt in das Wärmemedium eingestrahlt wird, sind keine aufwendigen Wärmetauscher erforderlich. Entsprechend treten auch keine Wärmeverluste in den Wärmetauschern auf. Die Kollektoren erfordern keine fluiddichten Abdichtungen, da lediglich die Wärmeenergie, nicht aber ein Fluid durch den Kollektor übertragen wird. Somit treten auch keine Korrosionsschäden an dem Kollektor oder den Fördermitteln auf. An den Kollektoren ist auch keine Abstrahlung in Abhängigkeit von einer Kollektortemperatur festzustellen, sodass die Solarenergie unabhängig von der Kollektortemperatur nutzbar ist. Die insgesamt mit der Erfindung gesteigerte Effizienz erlaubt den Einsatz kleinerer Kollektorflächen bei mindestens gleichem Ertrag. Falls die gewonnene Energie nicht mehr für die Wassererwärmung erforderlich ist, kann diese anderweitig, beispielsweise durch Photovoltaikmodule genutzt werden und in andere Energieformen gewandelt werden. Bei Einsatz einer konzentrierenden Photovoltaik sind deren Vorteile nutzbar, wie beispielsweise hoher Wirkungsgrad, geringe Zellfläche und dergleichen. Die konzentrierende Optik, die vorzugsweise nachgeführt wird, lässt sich somit neben der Wassererwärmung auch für das Erzeugen von Strom nutzen, wodurch eine Mehrfachfunktion realisiert ist.

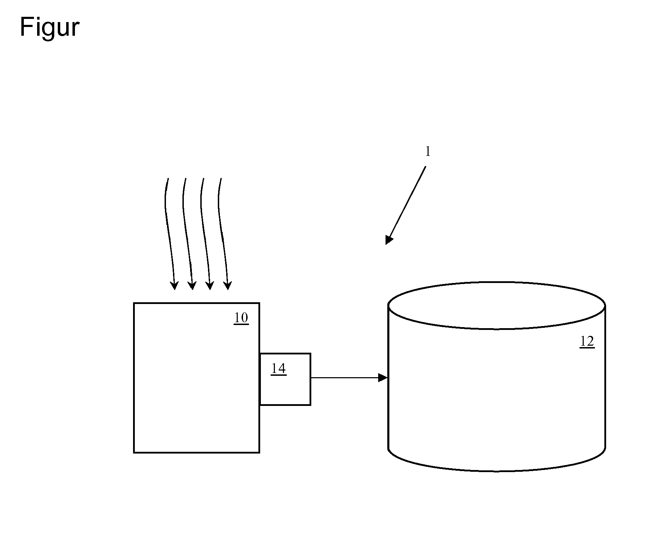

Die Zeichnung stellt schematisch ein Ausführungsbeispiel der Erfindung dar und zeigt in der einzigen Figur:
- Fig.: schematisch in einer Prinzipskizze Vorrichtung zur Erwärmung eines Fluids mit Solarenergie.

Die Figur zeigt schematisch eine Vorrichtung 1 zur Erwärmung eines Fluids mit Solarenergie. Die Vorrichtung 1 umfasst eine Aufnahmeeinheit 10 zum Aufnehmen von schematisch durch Pfeile dargestellter Solarenergie. Die Aufnahmeeinheit 10 ist an einer Aufnahmestelle angeordnet. Die Vorrichtung 1 umfasst weiter eine Übertragungseinheit 12 zum Übertragen zumindest eines Teils der aufgenommenen Solarenergie auf ein Fluid durch Erwärmen des Fluids. Das Fluid ist in dem dargestellten Ausführungsbeispiel in einem als Wassertank ausgebildeten Speicherbehälter gespeichert. Die Übertragungseinheit 12 umfasst eine an einer Behälterinnenwand angeordnete Energiewandlereinheit, welche durch die Solarenergie erwärmt wird und so das Fluid erwärmt.

Erfindungsgemäß ist die Übertragungseinheit 12 an einer von der Aufnahmeeinheit 10 entfernt angeordneten Übertragungsstelle angeordnet, wobei eine Lichttransporteinheit 14 vorgesehen ist, um die an der Aufnahmeeinheit 10 aufgenommene Solarenergie in Form von Lichtwellen von der Aufnahmestelle zu der Übertragungsstelle zu transportieren.

## Patentansprüche

1. Verfahren zur Wassererwärmung mit Solarenergie, umfassend ein Aufnehmen von Solarenergie an einer Aufnahmestelle und ein Übertragen zumindest eines Teils der aufgenommenen Solarenergie auf ein Wasser durch Erwärmen des Wassers an einer von der Aufnahmestelle entfernt angeordneten Übertragungsstelle,
**dadurch gekennzeichnet, dass** die Solarenergie in Form von Lichtwellen von der Aufnahmestelle zu der Übertragungsstelle transportiert wird.

2. Verfahren nach Anspruch 1,
**dadurch gekennzeichnet, dass** die Solarenergie vor dem Transport zu dem Wasser fokussiert und/oder gebündelt wird.

3. Verfahren nach Anspruch 1 oder 2,
**dadurch gekennzeichnet, dass** die gebündelte Solarenergie für die Übertragung auf das Wasser zerstreut wird.

4. Verfahren nach einem der Ansprüche 1 bis 3,
**dadurch gekennzeichnet, dass** die Solarenergie eine vom zu erwärmenden Wasser berührte Energiewandlereinheit erwärmt.

5. Verfahren nach einem der Ansprüche 1 bis 4,
**dadurch gekennzeichnet, dass** zumindest ein Teil der nicht für das Erwärmen erforderlichen, gebündelten Solarenergie in elektrischen Strom umgewandelt wird.

6. Vorrichtung zur Wassererwärmung mit Solarenergie, umfassend eine Aufnahmeeinheit zum Aufnehmen von Solarenergie an einer Aufnahmestelle und eine Übertragungseinheit zum Übertragen zumindest eines Teils der aufgenommenen Solarenergie auf ein Wasser durch Erwärmen des Wassers an einer von der Aufnahmestelle entfernt angeordneten Übertragungsstelle,
**dadurch gekennzeichnet, dass** eine Lichttransporteinheit (14) vorgesehen ist, um die Solarenergie in Form von Lichtwellen von der Aufnahmestelle zu der Übertragungsstelle zu transportieren.

7. Vorrichtung nach Anspruch 6,
**dadurch gekennzeichnet, dass** die Lichttransporteinheit (14) einen Lichtwellenleiter umfasst.

8. Vorrichtung nach Anspruch 6 oder 7,
**dadurch gekennzeichnet, dass** eine Lichtfokussiereinheit vorgesehen ist, um die Solarenergie vor dem Transport zu dem Wasser zu fokussieren und/oder zu bündeln.

9. Vorrichtung nach einem der Ansprüche 6 bis 8,
**dadurch gekennzeichnet, dass** eine Streuungseinheit vorgesehen ist, welche die gebündelte Solarenergie für die Übertragung auf das Wasser zerstreut.

10. Vorrichtung nach einem der Ansprüche 6 bis 9,
**dadurch gekennzeichnet, dass** die Übertragungseinheit (12) eine Energiewandlereinheit umfasst, die sich unter Einwirkung der Solarenergie erwärmt, und die wärmeleitend mit dem zu erwärmenden Wasser in Verbindung steht.

11. Vorrichtung nach einem der Ansprüche 6 bis 10,
**dadurch gekennzeichnet, dass** eine wasserberührte Oberfläche der Energiewandlereinheit mit oberflächenvergrößernden Elementen, insbesondere umfassend Rippen und Nägel, versehen ist.

12. Vorrichtung nach einem der Ansprüche 6 bis 11,
**dadurch gekennzeichnet, dass** das zu erwärmende Wasser in einem Speicherbehälter vorliegt und die Energiewandlereinheit flächig an der Behälterinnenwand angeordnet ist.

13. Vorrichtung nach einem der Ansprüche 6 bis 12,
**dadurch gekennzeichnet, dass** mindestens eine Photovoltaikeinheit vorgesehen ist, um zumindest einen Teil der nicht für das Erwärmen erforderlichen, gebündelten Solarenergie in elektrischen Strom umzuwandeln.

14. Vorrichtung nach einem der Ansprüche 6 bis 13,
**dadurch gekennzeichnet, dass** eine Schalteinheit für ein Umschalten zwischen Wasser erwärmender Nutzung und Strom erzeugender Nutzung der Solarenergie vorgesehen ist.

15. Solaranlage zur Wärmegewinnung aus Solarenergie,
**dadurch gekennzeichnet, dass** eine Vorrichtung nach einem der Ansprüche 6 bis 14 vorgesehen ist.
